# FASCICULE DE BREVET EUROPEEN

(11) **EP 0 592 271 B1**
(45) Date de publication et mention de la délivrance du brevet: **24.06.1998**
(21) Numéro de dépôt: 93402341.7
(22) Date de dépôt: 24.09.1993
(51) Int. Cl.: E04B 1/84, B60R 13/08, B62D 29/04, B32B 7/06, B32B 7/08, G10K 11/168

(54) **Dispositif d'isolation acoustique, notamment pour tablier avant de véhicule automobile**
Schalldämmungsvorrichtung, insbesondere für Automobil-Vorderschürze
Acoustic insulation device, especially for the front shield of an automotive vehicle

(30) Priorité: 05.10.1992 FR 9211780
(43) Date de publication de la demande: 13.04.1994
(73) Titulaire: AUTOMOBILES PEUGEOT, 75116 Paris (FR); AUTOMOBILES CITROEN, 92200 Neuilly-sur-Seine (FR)
(72) Inventeur: Bondu, Jacques, F-91430 Igny (FR)
(74) Mandataire: Thinat, Michel

(56) Documents cités:
- EP-A- 0 486 427
- DE-A- 3 809 185
- DE-U- 9 107 484
- US-A- 4 045 076

## Description

La présente invention se rapporte à un dispositif d'isolation acoustique, notamment pour véhicule automobile.

Elle vise en particulier un dispositif d'isolation acoustique qui est caractérisé en ce qu'il comprend une pièce inerte dite masse lourde en PVC, caoutchouc ou analogue et un revêtement en mousse destiné à être interposé entre la masse lourde et une cloison à isoler et en ce que le revêtement en mousse est en simple contact avec la masse lourde et est fixé à celle-ci par des moyens démontables de solidarisation.

Un tel dispositif a ainsi pour but de permettre un recyclage des matériaux le composant.

En outre, dans le cas où des organes tels que, par exemple, colonne de direction, commandes diverses ou conduites d'aération doivent traverser la cloison à isoler, des évidements débouchants dits "découpes" doivent être formés à travers le dispositif d'isolation et ces découpes réduisent considérablement le taux d'isolation phonique.

L'invention a ainsi également pour but d'améliorer l'isolation acoustique au niveau des découpes traversant le dispositif d'isolation.

US-A-4 045 076 décrit un système pour faciliter et simplifier la mise en place et le démontage d'un insonorisant à et d'une paroi d'une cabine de véhicule, notamment un véhicule de chantier et normalement constitué de deux couches en matériau mousse reliées entre elles par une couche adhésive. Le système consiste à prévoir deux boulons spéciaux comprenant essentiellement une vis solidaire d'une base en forme de disque collée à la paroi de la cabine du véhicule et un bouton emmanché sur la vis pour appliquer les revêtements de mousse sur cette paroi. Cependant, ce système connu ne pose pas le problème de recyclage des composants de l'insonorisant et ce dernier n'est pas agencé pour résoudre un tel problème.

EP-A-0 486 427 décrit un dispositif de protection thermique et acoustique pour véhicule automobile comprenant une couche de support et une couche en un matériau isolant thermiquement et acoustiquement. Ces différentes couches sont en un métal ou un alliage métallique léger, la couche isolante étant poreuse.

Ce document antérieur ne pose, ni ne résout le problème de recyclage d'un insonorisant.

En résumé, le dispositif de la présente invention tel que défini dans la revendication 1 est agencé pour permettre le recyclage des matériaux dont il est composé et améliorer l'isolation au niveau des découpes le traversant.

Les moyens de solidarisation relient positivement certaines zones prédéterminées seulement de la masse lourde et du revêtement en mousse.

Suivant un mode de réalisation, le revêtement précité est constitué par des plaques de mousse. Alors, les moyens de solidarisation comportent une ou plusieurs déformations de la masse lourde, respectivement aptes à enserrer au moins une des plaques de mousse.

Dans ce cas, la masse lourde peut comprendre au moins une cavité s'évasant vers le fond et délimitée par une ou plusieurs des déformations précitées, tandis qu'une plaque de mousse est logée dans la cavité avec une face en contact avec le fond de celle-ci, cette face ayant une aire sensiblement égale à celle du fond, de manière a occuper entièrement la cavité.

L'invention est aussi caractérisée en ce que les moyens de solidarisation comprennent au moins un élément solidaire du revêtement en mousse et faisant saillie d'une face de ce dernier en regard de la masse lourde, cet élément étant apte à s'agrafer directement ou élastiquement sur la masse lourde.

Dans ce cas, les moyens de solidarisation peuvent comprendre en outre une ouverture débouchante formée dans la masse lourde, tandis que l'élément en saillie précité est constitué par un corps venu de matière avec le revêtement et dont l'extrémité libre forme une tête de blocage ayant une section transversale supérieure à celle de l'ouverture débouchante, l'élément étant apte à traverser l'ouverture de façon que la tête se plaque contre une face de la masse lourde opposée à la face précitée du revêtement en mousse, à la périphérie de l'ouverture.

L'invention est également caractérisée en ce que, si une découpe est formée à travers le dispositif en regard d'un orifice de section correspondante débouchant d'une tôle, les moyens de solidarisation comprennent un système apte à solliciter le dispositif à l'encontre de la tôle, à proximité de la découpe.

En fait, le système de sollicitation précité comprend une bride apte à être mise en contact avec une face du dispositif opposée à sa face en contact avec la tôle, ainsi qu'au moins un organe de serrage permettant de solliciter la bride à l'encontre de la tôle.

De préférence, l'organe de serrage comprend un écrou ainsi qu'une vis dont une extrémité est fixée sur la tôle, cette vis traversant le dispositif ainsi que la bride par des perçages réalisés dans ceux-ci, et venant se loger par son autre extrémité dans l'écrou, lui-même en appui contre la bride.

Mais d'autres caractéristiques et avantages de l'invention ressortiront mieux de la description détaillée de modes de réalisation donnés uniquement à titre d'exemple, qui suit et se réfère aux dessins annexés, dans lesquels:

La figure 1 est une demi-vue en perspective d'un dispositif d'isolation acoustique pour véhicule automobile.

La figure 2 est une coupe partielle suivant la ligne II-II de la figure 1.

La figure 3 est une vue similaire à la figure 2, qui représente un mode de réalisation de moyens de solidarisation du revêtement en mousse et de la masse lourde du dispositif.

La figure 4 est une vue similaire à la figure 3, qui représente un autre mode de réalisation de moyens de solidarisation.

La figure 5 est une vue similaire à la figure 4, qui représente encore un autre mode de réalisation de moyens de solidarisation.

Sur les figures, la référence numérique 1 désigne un dispositif d'isolation acoustique. Suivant l'exemple illustré, le dispositif 1 est prévu pour un véhicule automobile quelconque. Sur la figure 5, on voit seulement une tôle d'un tablier avant 2 de ce véhicule, c'est-à-dire la cloison ou structure qui sépare le compartiment moteur et l'habitacle.

Le dispositif 1 comprend notamment une pièce en matière inerte 12, couramment appelée "masse lourde", ainsi qu'une couche ou revêtement en mousse 13, interposée entre la masse lourde 12 et la structure à isoler, à savoir l'habitacle du véhicule.

Conformément à l'invention, le revêtement en mousse 13 est en simple contact avec la masse lourde 12. En fait, le revêtement 13 est ici constitué par au moins une pièce rapportée, qui est fixée sur la masse lourde 12 à l'aide de moyens démontables de solidarisation, dont plusieurs modes de réalisation seront décrits ultérieurement.

Bien qu'une telle solution nécessite des investissements supérieurs à ceux qui sont requis pour les dispositifs connus, elle permet non seulement d'améliorer la fonction d'isolation phonique du dispositif, mais surtout de rendre plus aisé le recyclage des produits ou matières avec lesquels ce dispositif est fabriqué.

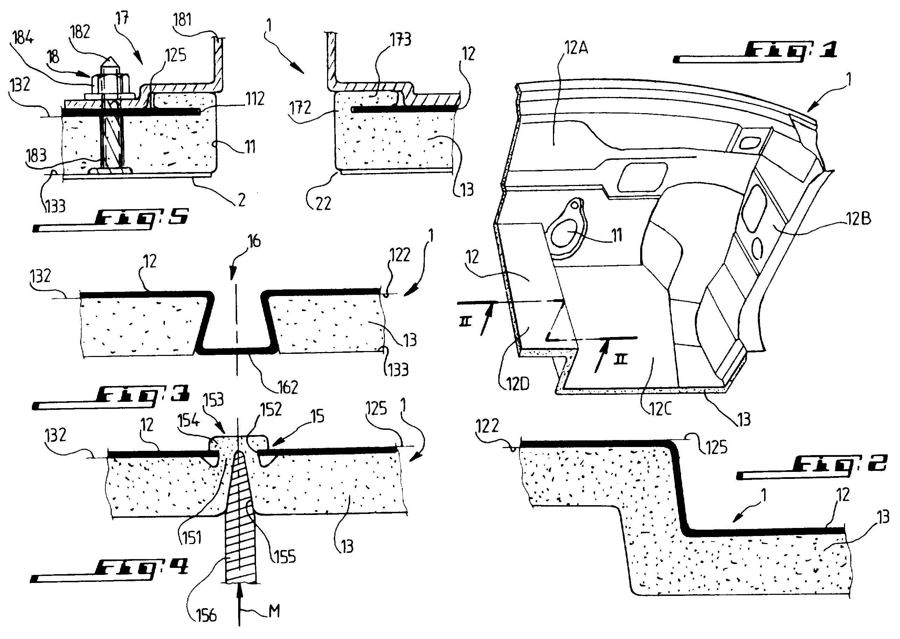

Suivant l'exemple illustré, la masse lourde 12 est une coque thermoformée en PVC, caoutchouc ou analogues, dont la forme correspond, comme on le voit bien sur la figure 1, sensiblement à l'intérieur de l'habitacle du véhicule équipé du dispositif 1, à proximité de son tablier avant 2. On notera ici que la coque 12 comprend une partie avant 12A correspondant au tablier 2, ainsi que deux parties latérales 12B, à peu près verticales et dont une seule est illustrée. De plus, une partie 12C de la coque 12 s'étend sensiblement à l'horizontale de manière à recouvrir le plancher du véhicule, et comprend un bossage central 12D qui recouvre un tunnel de transmission de ce véhicule.

Pour sa part, le revêtement 13 est constitué par une couche ou par une pluralité de plaques approximativement jointives, réalisées dans un matériau moussant tel que du polyuréthane. Le revêtement 13, dont la forme correspond sensiblement à la face externe 122 de la coque 12, c'est-à-dire à sa face venant en regard de la structure à isoler, sera fabriqué séparément de la coque 12, à l'aide d'un outillage approprié, tel que par exemple un moule.

Par ailleurs, on sait que les matières comme le PVC ou le caoutchouc peuvent directement être réutilisées, tandis que les mousses à base de polyuréthane doivent d'abord être broyées avant de pouvoir être réemployées, par exemple par adjonction à une mousse. Dès lors, il est impératif de séparer la coque 12 et la mousse 13 afin de permettre leur recyclage. Or, si le revêtement 13 adhère à la face 122 par toute sa surface de contact avec la coque 12, la séparation de cette dernière et de la mousse 13 devient particulièrement fastidieuse.

Par contre, on remarque sur les figures 3 à 5 que les moyens de solidarisation relient positivement certaines zones prédéterminées seulement de la masse lourde 12 et du revêtement 13, de sorte que leur séparation pour recyclage est ici rapide et aisée.

En se reportant à la figure 4, on voit que le dispositif 1 comporte des moyens de solidarisation 15. Ces moyens 15 permettent de fixer le revêtement 13 sur la coque 12 par agrafage direct ou élastique, couramment appelé "clippage".

Dans ce but, les moyens 15 comprennent notamment un élément 153, solidaire du revêtement 13 et faisant saillie d'une face 132 de celui-ci. La face 132 est disposée en regard de la coque 12, et plus précisément en face d'une ouverture débouchante 152 qui traverse la masse lourde.

Selon le mode de réalisation illustré, l'élément 153 est venu de matière avec le revêtement 13. Cependant, celui-ci peut être constitué par une pièce rapportée telle qu'agrafe. L'élément 153 comprend un corps 151 de forme à peu près cylindrique, dont la section transversale a une aire sensiblement égale à celle de l'ouverture 152, et comporte à son extrémité libre une tête de blocage 154. Dans la position de fixation illustrée sur la figure 4 où les moyens 15 réalisent l'assemblage par clippage du revêtement 13 sur la masse 12, la tête de blocage 154, dont l'aire en section transversale est supérieure à celle de l'ouverture 152, vient se plaquer élastiquement contre une face 125 de la masse lourde. Evidemment, la face 125 est opposée à la face 122, et donc au revêtement 13.

La mise en place des moyens 15 s'effectue en disposant la tête 154 en regard de l'ouverture 152, puis en introduisant dans le revêtement 13, un outil 156 en forme de doigt conique. Ensuite, le doigt 156 est déplacé suivant le sens de la flèche M (figure 4), jusqu'à ce que la tête 154 se déforme élastiquement pour traverser l'ouverture 152 et vienne se plaquer contre la face 125, en position de fixation. Le démontage de la liaison ainsi obtenue s'effectue en appliquant sur la tête 154, suivant un sens opposé à M, un outil de section inférieure à celle de l'ouverture 152, jusqu'à ce que l'élément 153 s'échappe de celle-ci, ou encore par traction à partir de l'autre face.

On peut également prévoir, dans la masse 13, un creux (par exemple venu de moulage) pour recevoir l'outil 156.

En se reportant à la figure 3, des moyens démontables de solidarisation 16 vont maintenant être décrits. Ces moyens 16, qui s'appliquent de préférence au cas où le revêtement 13 est constitué par des plaques séparées en mousse, comportent au moins une déformation 162 formée dans la masse lourde 12 et en saillie de la face 122. La hauteur de la déformation 162 est ici sensiblement égale à l'épaisseur de la plaque 13 correspondante, afin d'enserrer un rebord de celle-ci, et de rendre le revêtement 13 solidaire de la coque 12. Evidemment, les déformations 162 peuvent également être rapportées sur la coque 12. Par exemple, celles-ci pourront être constituées par des cornières fixées sur la coque 12 de manière qu'un épaulement de cette cornière vienne en appui élastiquement sur la face 133 du revêtement 13, afin de plaquer celui-ci contre la face 122 de la coque.

Au vu de la figure 3, on comprend que chaque déformation 162 (ou plusieurs déformations conjointement) peut délimiter une cavité s'évasant vers le fond et à l'intérieur de laquelle une plaque du revêtement 13 peut être montée. Le fond d'une telle cavité est le plan de la masse lourde 12 parallèle à la face 133, qui est entouré de déformations 162 et contre lequel la face 132 de la plaque 13 correspondante vient en appui. L'aire du fond de chaque cavité est égale, sinon légèrement inférieure, à celle de la face 132 de la plaque correspondante. En outre, les parois de chaque cavité en saillie du fond sont inclinées vers l'intérieur de cette cavité. Ainsi, chaque cavité est entièrement occupée par une plaque de revêtement 13. Afin d'encore améliorer la tenue des plaques 13 sur la coque 12, les dimensions des cavités sont choisies de façon que les plaques 13 correspondantes y soient logées avec leurs rebords externes déformés élastiquement en compression.

Sur la figure 5, on voit que la tôle 2 comporte un orifice 22, tel qu'un passage de colonne de direction par exemple. En regard du passage 22, une découpe 11 est formée dans le revêtement 13, et une autre découpe 112, de section plus importante, est formée dans la coque 12. A proximité des découpes 11 et 112, les moyens de solidarisation de la masse lourde 12 et du revêtement 13 sont désignés en 17, et comprennent un système 18 de sollicitation du dispositif 1 à l'encontre de la tôle 2.

Les moyens 17 proprement dits comprennent une chemise 172, venue de matière avec le revêtement 13 et s'étendant depuis la face 132, à l'intérieur de la découpe 112. L'extrémité de la chemise 172 forme une collerette 173 qui s'étend vers l'extérieur de la découpe 11, le long de la face 125 de la coque 12, à la façon d'un rabat.

Par ailleurs, le système 18 comporte une bride 181, pouvant être mise en appui contre la face 125 du dispositif 1, ainsi qu'au moins un organe de serrage, qui permet de solliciter la bride 181 vers la tôle 2. Ici, les organes de serrage sont constitués par une pluralité de vis 182 réparties autour de la découpe 11, sur chacune desquelles un écrou 184 peut être monté. Une extrémité de chaque vis 182 est rendue solidaire de la tôle 2, tandis que son autre extrémité fait saillie d'un perçage formé dans la bride 181. La vis 182 traverse donc la bride 181, ainsi qu'un perçage 183 s'étendant de part en part du dispositif 1, de la face 133 de la couche 13 à la face 125 de la masse 12. Ainsi, en serrant chaque écrou 184 qui prend appui contre la bride 181, celle-ci plaque le dispositif 1 contre la tôle 2.

Un tel montage permet de diminuer les vibrations et les bruits transmis à travers la découpe 11, par rapport aux dispositifs d'isolation acoustique de l'art antérieur. En effet, la découpe 11 est ici entièrement recouverte de mousse 13, et la bride 181 vient en appui, à proximité de cette découpe, contre la collerette en mousse 173, ce qui a pour effet d'absorber au mieux les vibrations provenant de la tôle 2 et de l'orifice 22.

On a donc obtenu conformément à l'invention un dispositif d'isolation acoustique qui permet de pallier les inconvénients énoncés plus hauts.

Il va de soi que chaque dispositif 1 peut être équipé d'un ou plusieurs moyens de solidarisation 15, 16 ou 17.

## Revendications

1. Dispositif d'isolation acoustique, notamment pour l'habitacle d'un véhicule automobile, caractérisé en ce qu'il comprend une pièce inerte dite masse lourde (12) en PVC, caoutchouc ou analogue et un revêtement en mousse (13) destiné à être interposé entre la masse lourde (12) et une cloison à isoler et en ce que le revêtement en mousse (13) est en simple contact avec la masse lourde (12) et est fixé à celle-ci par des moyens démontables de solidarisation (15; 16; 17).

2. Dispositif selon la revendication 1, caractérisé en ce que les moyens de solidarisation (15; 16; 17) relient positivement certaines zones prédéterminées seulement de la masse lourde (12) et du revêtement en mousse (13).

3. Dispositif selon la revendication 2, caractérisé en ce que, le revêtement (13) étant constitué par des plaques de mousse, les moyens de solidarisation (16) comprennent une ou plusieurs déformations (162) de la masse lourde (12), respectivement aptes à enserrer au moins une plaque de mousse (13).

4. Dispositif selon la revendication 3, caractérisé en ce que la masse lourde (12) comprend au moins une cavité s'évasant vers le fond et délimitée par une ou plusieurs des déformations (162) précitées, une plaque de mousse (13) pouvant se loger dans chaque cavité, avec une face (132) en appui contre le fond de celle-ci, dont l'aire est sensiblement égale à celle de la face (132) de la plaque (13) de sorte que cette plaque occupe entièrement la cavité.

5. Dispositif selon l'une des revendications 2 à 4, caractérisé en ce que les moyens de solidarisation (15) comprennent au moins un élément (153) solidaire du revêtement en mousse (13) et faisant saillie de l'une (132) de ses faces disposée en regard de la masse lourde (12), cet élément (153) étant apte à s'agrafer directement ou élastiquement sur la masse lourde (12).

6. Dispositif selon la revendication 5, caractérisé en ce que les moyens de solidarisation (15) comprennent en outre une ouverture débouchante (152) formée dans la masse lourde (12), tandis que l'élément en saillie (153) est constitué par un corps (151) venu de matière avec le revêtement (13) et dont l'extrémité libre (154) forme une tête de blocage ayant une section transversale supérieure à celle de l'ouverture débouchante (152), l'élément (153) étant apte à traverser l'ouverture (152) de façon que la tête (154) se plaque contre une face (125) de la masse lourde (12) opposée à la face (132) précitée du revêtement en mousse (13), à la périphérie de l'ouverture (152).

7. Dispositif selon l'une des revendications 1 à 6, caractérisé en ce que la cloison (2) comportant un orifice (22), il présente une découpe (11, 112) de section correspondante formée à travers le dispositif (1) en regard de l'orifice (22) débouchant de la cloison (2), les moyens de solidarisation (17) comprennent un système (18) apte à solliciter le dispositif (1) à l'encontre de la cloison (2), à proximité de la découpe (11, 112).

8. Dispositif selon la revendication 7, caractérisé en ce que le système de sollicitation (18) précité comprend une bride (181) apte à venir en appui contre une face (125) du dispositif (1) opposée à sa face (133) en contact avec la cloison (2), ainsi qu'au moins un organe de serrage (182, 184) permettant de solliciter la bride (181) à l'encontre de la tôle (2).

9. Dispositif selon la revendication 8, caractérisé en ce que l'organe de serrage est constitué par une vis (182) dont une extrémité est fixée à la cloison (2), ainsi que par un écrou (184), la vis (182) traversant des perçages (183) réalisés à travers le dispositif (1) ainsi que la bride (181), et coopérant par son autre extrémité avec l'écrou (184), qui est lui-même en appui et serré contre la bride (181).

## Patentansprüche

1. Schalldämmungsvorrichtung insbesondere in dem Karosseriegehäuse eines Kraftfahrzeuges, dadurch gekennzeichnet, dass sie ein schwere Masse genanntes innertes Stück (12) aus PVC, Gummi oder dergleichen und eine zur Zwischenschaltung zwischen der schweren Masse (12) und einer abzudämmenden Trennwand bestimmte Verkleidung (13) aus Schaum umfasst und dass die Schaumverkleidung (13) in einfacher Berührung mit der schweren Masse (12) ist und an derselben durch abnehmbare Befestigungsmittel (15;16;17) befestigt ist.

2. Vorrichtung nach Anspruch 1, dadurch gekennzeichnet, dass die Befestigungsmittel (15:16;17) nur gewisse vorbestimmte Bereiche der schweren Masse (12) und der Schaumverkleidung (13) positiv verbinden.

3. Vorrichtung nach Anspruch 2, dadurch gekennzeichnet, dass, wenn die Verkleidung (13) durch Schaumplatten gebildet wird, die Befestigungsmittel (16) eine oder mehrere Verformungen (162) der schweren Masse (12) aufweisen, die jeweils geeignet sind, wenigstens eine Schaumplatte (13) einzuspannen.

4. Vorrichtung nach Anspruch 3, dadurch gekennzeichnet, dass die schwere Masse (12) wenigstens einen sich zum Boden hin aufweitenden und durch eine oder mehrere vorgenannte Verformungen (162) abgegrenzten Hohlraum aufweist, wobei eine Schaumplatte (13) in jedem Hohlraum untergebracht werden kann, mit einer an dem Boden desselben abgestützten Seitenfläche (132), deren Flächeninhalt demjenigen der Seitenfläche (132) der Platte (13) etwa gleich ist, so dass diese Platte den Hohlraum vollständig einnimmt.

5. Vorrichtung nach einem der Ansprüche 1 bis 4, dadurch gekennzeichnet, dass die Befestigungsmittel (15) wenigstens ein mit der Verkleidung aus Schaum (13) fest verbundenes und von einer (132) ihrer der schweren Masse (12) gegenüberliegenden Flächen vorspringendes Element (153) umfassen, wobei dieses Element (153) geeignet ist, um sich unmittelbar oder elastisch an der schweren Masse (12) zu verklammern.

6. Vorrichtung nach Anspruch 5, dadurch gekennzeichnet, dass die Befestigungsmittel (15) ausserdem eine in der schweren Masse (12) gebildete ausmündende Öffnung (152)aufweisen, während das vorspringende Element (153) durch einen einstückig aus Werkstoff mit der Verkleidung (13) gebildeten Körper (151) gebildet wird, dessen freies Ende (154) einen Festhaltungskopf mit einem grösseren Querschnitt als derjenige der ausmündenden Öffnung (152) bildet, wobei das Element (153) geeignet ist, die Öffnung (152) derart zu durchsetzen, dass der Kopf (154) sich an eine der vorgenannten Fläche (132) der Schaumverkleidung (13) entgegengesetzte Fläche (125) der schweren Masse (12) am Umfang der Öffnung (152) anzudrücken.

7. Vorrichtung nach einem der Ansprüche 1 bis 6, dadurch gekennzeichnet, dass, wenn die Trennwand (2) ein Loch (22) aufweist, die Vorrichtung einen durch die Vorrichtung (1) hindurch gebildeten dem in der Trennwand (2) ausmündenden Loch (22) gegenüberliegenden Ausschnitt (11, 112) entsprechenden Querschnitts aufweist, wobei die Befestigungsmittel (17) ein zur Beaufschlagung der Vorrichtung (1) gegen die Trennwand (2) in der Nähe des Ausschnitts (11,112) geeignetes System (18) aufweisen.

8. Vorrichtung nach Anspruch 7, dadurch gekennzeichnet, dass das vorgenannte Beaufschlagungssystem (18) einen zur Abstützung an einer ihrer mit der Trennwand (2) in Berührung stehenden Fläche (133) entgegengesetzten Fläche (125) der Vorrichtung (1) zur Abstützung kommenden Flansch (181) sowie wenigstens ein die Beaufschlagung des Flansches (181) gegen das Blech (2) gestattendes Einspannungsglied (182, 184) aufweist.

9. Vorrichtung nach Anspruch 8, dadurch gekennzeichnet, dass das Einspannungsglied durch eine Schraube (182), deren ein Ende an der Trennwand (2) befestigt ist, sowie durch eine Mutter (184) gebildet wird, wobei die Schraube (182) durch die Vorrichtung (1) sowie den Flansch (181) hindurch gebildete Bohrungen (183) durchsetzt und mit ihrem anderen Ende mit der Mutter (184), die selber an dem Flansch (181) abgestützt und angedrückt wird, zusammenwirkt.

## Claims

1. Acoustic insulation device, in particular for the passenger compartment of an automotive vehicle, characterized in that it comprises an inert piece so-called heavy mass (12) of PVC, rubber or the like and a foamlining (13) intended to be interposed between the heavy mass (12) and a partition wall to be insulated and in that the foam lining (13) is in simple contact with the heavy mass (12) and is fastened thereto by removable securing means (15 ; 16 ; 17).

2. Device according to claim 1, characterized in that the securing means (15 ; 16 ; 17) positively connect some predetermined zones only of the heavy mass (12) and of the foam lining (13).

3. Device according to claim 2, characterised in that with the lining (13) being constitued by foam plates, the securing means (16) comprise one or several deformations (162) of the heavy mass (12), adapted to enclose at least one foam plate (13), respectively.

4. Device according to claim 3, characterized in that the heavy mass (12) comprises at least one cavity flaring towards the bottom and defined by one or several aforesaid deformations (162), a foamplate (13) which may be accommodated within each cavity, with one face (132) bearing upon the bottom thereof, the surface area of which is substantially equal to that of the face (132) of the plate (13), so that this plate fully occupies the cavity.

5. Device according to one of claims 2 to 4, characterized in that the securing measn (15) comprise at least one element (153) made fast to the foam lining (13) and projecting from one (132) of its faces arranged in front of the heavy mass (12), this element (153) being adapted to clip itself directly or elastically onto the heavy mass (12).

6. Device according to claim 5, characterized in that the securing means (15) moreover comprise an opening aperture (152) formed in the heavy mass (12), whereas the projecting element (153) is constituted by a body (151) made integral in one piece of material with a lining (13) and the free end (154) of which forms a blocking head having a cross-section greater than that of the opening aperture (152), the element (153) being adapted to extend through the aperture (152) so that the head (154) be pressed upon one face (125) of the heavy mass (12) opposite to the aforesaid face (132) of the foam-lining (13), at the periphery of the aperture (152).

7. Device according to one of the claims 1 to 6, characterized in that the partition wall (2) comprising a hole (22), it exhibits a cut-out (11, 112) of corresponding section formed through the device (1) in front of the hole (22) opening from the partitional wall (2), the securing means (17) comprise a system (18) adapted to urge the device (1) towards the partition wall (2) near the cut-out (11, 112).

8. Device according to claim 7, characterized in that the aforesaid urging system (18) comprises a flange (181) adapted to be caused to bear upon one face (125) of the device (1) opposite to its face (133) in contact with a partition wall (2), as well as at least one clamping means (182, 184) permitting to urge the flange (181) towards the metal sheet (2).

9. Device according to claim 8, characterized in that the clamping member is constituted by a screw (182) one end of which is fastened to the partition wall (2) as well as by a nut (184), the screw (182) extending through bores (183) formed through the device (1) as well as the flange and cooperating with its other end with the nut (184) which itself is bearing and tightened upon the flange (181).
